Europäisches Patentamt

European Patent Office

Office européen des brevets

Veröffentlichungsnummer: **0 283 993**
**A2**

## EUROPÄISCHE PATENTANMELDUNG

Anmeldenummer: 88104475.4

Int. Cl.⁴: **B27C 3/06**

Anmeldetag: 21.03.88

Priorität: **21.03.87 DE 8704263 U**

Veröffentlichungstag der Anmeldung:
**28.09.88 Patentblatt 88/39**

Benannte Vertragsstaaten:
**AT BE CH DE ES FR GB IT LI NL SE**

Anmelder: **Jenkner, Erwin**
**Lindenstrasse 13**
**D-7261 Gechingen-Bergwald(DE)**

Erfinder: **Jenkner, Erwin**
**Lindenstrasse 13**
**D-7261 Gechingen-Bergwald(DE)**

Vertreter: **Becker, Maria, Dipl.-Phys.**
**Auf dem Haigst 29**
**D-7000 Stuttgart 70(DE)**

Bohrmaschine zum flachseitigen und/oder stirnseitigen Bohren von plattenförmigen Werkstücken oder Plattenzuschnitten.

Es wird eine Bohrmaschine zum flachseitigen und/oder stirnseitigen Bohren von plattenförmigen Werkstücken oder Plattenzuschnitten beschrieben, die vorteilhafte Bearbeitungsmöglichkeiten bietet. Der Bohrmaschine sind an ihrer der Werkstückvorschubvorrichtung gegenüberliegenden Bedienungsseite beidseitig jeweils ein mit einem Seitenanschlag ausgestatteter Werkstückanlegetisch sowie eine Spannvorrichtung zum Festlegen von Werkstücken bzw. Plattenzuschnitten auf dem Werkstückauflagetisch zugeordnet, wodurch es beispielsweise möglich ist, jeweils zwei zu einem Möbel gehörende und spiegelbildlich mit Konstruktionsbohrungen auszustattende Werkstücke gemeinsam auf jeweils einen der Werkstückanlegetische aufzulegen, an deren jeweiligem Seitenanschlag auszurichten und sie danach im Werkstückschieber der Werkstückvorschubvorrichtung festzuspannen. Die Maschinentotzeiten können auf ein Minimum reduziert werden.

Fig. 1

# Bohrmaschine zum flachseitigen und/oder stirnseitigen Bohren von plattenförmigen Werkstücken oder Plattenzuschnitten

Die Erfindung betrifft eine Bohrmaschine zum flachseitigen und/oder stirnseitigen Bohren von plattenförmigen Werkstücken oder Plattenzuschnitten, mit einem Werkstückauflagetisch, einer einen Werkstückschieber aufweisenden Werkstückvorschubvorrichtung und einer an deren Vorderende angeordneten, parallel zur Auflagefläche des Werkstückauflagetisches und quer zur Vorschubrichtung des mit Spannzangen ausgestatteten Werkstückschiebers verfahrbaren und feststellbaren Bohrvorrichtung, die mit je mindestens einer Bohrspindel ausgestattete Bohraggregate zum flachseitigen und/oder stirnseitigen Bohren aufweist, wobei die Bohrspindel zum stirnseitigen Bohren sowohl vertikal als auch in Bewegungsrichtung des Werkstückschiebers verstellbar ist.

Eine Bohrmaschine dieser Art ist bereits bekannt (DE-OS 35 22 278).

Diese bekannte, mit einer Werkstückvorschubvorrichtung kombinierte Bohrmaschine kann mit einer Plattenaufteilmaschine verkettet werden, so dass es möglich ist, im Zuge des Aufteilens plattenförmiger Werkstücke die dabei anfallenden Plattenzuschnitte zugleich auch zu bohren, ohne sie hierzu von der Plattenaufteilmaschine herunternehmen zu müssen.

Der Erfindung liegt die Aufgabe zugrunde, eine solche Bohrmaschine auch für sich allein als Bearbeitungsmaschine einsetzen und mit ihrer Hilfe plattenförmige Werkstücke oder Plattenzuschnitte rationell mit Konstruktionsbohrungen ausstatten zu können.

Diese Aufgabe wird erfindungsgemäss dadurch gelöst, dass oder Bohrvorrichtung an ihrer der Werkstückvorschubvorrichtung gegenüberliegenden Bedienungsseite beidseitig jeweils ein mit einem Seitenanschlag ausgestatteter Werkstückanlegetisch sowie eine Spannvorrichtung zum Festlegen von Werkstücken bzw. Plattenzuschnitten auf dem Werkstückauflagetisch zugeordnet sind.

Eine derartige Maschinenkonzeption bietet vorteilhafte Bearbeitungsmöglichkeiten. So ist es beispielsweise möglich, jeweils zwei zu einem Möbel gehörende und spiegelbildlich mit Konstruktionsbohrungen auszustattende Werkstücke gemeinsam auf jeweils einen der Werkstückanlegetische aufzulegen, an deren jeweiligem Seitenanschlag auszurichten und sie danach im Werk stückschieber der Werkstückvorschubvorrichtung festzuspannen. Anschliessend können dann beide Werkstücke mittels des Werkstückschiebers in eine hintere Ausgangsposition zurückgezogen werden und danach - schrittweise wieder in die entgegengesetzte Richtung transportiert und beispielsweise programmgesteuert in vorbestimmten Bearbeitungspositionen festgelegt und nacheinander mittels der Bohrvorrichtung jeweils im gleichen Werkstückbereich spiegelbildlich gebohrt werden. In diesem Falle wird auf der Bohrmaschine jeweils ein Werkstückpaar fertiggestellt.

Ebensogut ist es aber auch möglich, auf die Werkstückanlegetische wechselweise Werkstücke aufzulegen und auszurichten, dergestalt, dass mittels des Werkstückschiebers ein auf dem einen Werkstückanlegetisch ausgerichtetes Werkstück in seine hintere Ausgangsposition gefahren und danach schrittweise in Vorschubrichtung zum Einbringen von Konstruktionsbohrungen transportiert wird, wobei während den durchzuführenden Bohroperationen auf den anderen Werkstückanlegetisch ein weiteres Werkstück aufgelegt und ausgerichtet werden kann, das dann im Werkstückschieber gespannt werden kann, sobald das andere Werkstück fertiggebohrt in seine ursprüngliche Ausgangsstellung zurücktransportiert worden ist. Während dann das neu zu bohrende Werkstück zunächst zurückgezogen und anschliessend zum Bohren - schrittweise wieder in die entgegengesetzte Richtung geschoben wird, kann das fertig gebohrte Werkstück von der Maschine abgenommen und auf den betreffenden Werkstückanlegetisch ein weiteres, spiegelbildlich zu bohrendes Werkstück aufgelegt werden.

Die Ausstattung der Bohrmaschine mit zwei Werkstückanlegetischen ermöglicht es somit, die Maschinentotzeiten auf einem Minimum zu halten, bzw. den Maschinendurchsatz in der Zeiteinheit zu verdoppeln, wobei sich die Arbeit für das Bedienungspersonal insoweit stark vereinfacht gestattet, weil beispielsweise rechte Möbelseitenteile auf den rechten und linke Möbelseiteinteile auf den linken Werkstückanlegetisch aufzulegen sind.

Vorteilhafte Ausgestaltungen der Erfindung sind Gegenstand von Unteransprüchen.

In der Zeichnung ist ein Ausführungsbeispiel der Erfindung schematisiert dargestellt. Es zeigen:

Fig. 1 eine Draufsicht der Bohrmaschine, in deren Werkstückschieber rechts-und linksseitig jeweils ein Plattenzuschnitt gespannt ist, die durch den Werkstückschieber in ihre hintere Ausgangsposition gezogen worden sind;

Fig. 2 eine Darstellung ähnlich Fig. 1, wobei jedoch nur ein Plattenzuschnitt in die hintere Ausgangsposition zurückgezogen ist, während ein weiterer Plattenzuschnitt auf einen der Werkstückanlegetische aufgelegt und ausgerichtet worden ist;

Fig. 3 eine Draufsicht auf die Bohrvorrichtung;

Fig. 4 einen Schnitt entlang der Linie 4-4 der Fig. 3, welcher das Bohraggregat zum stirnseitigen Bohren veranschaulicht, das in Arbeitsposition hochgefahren ist.

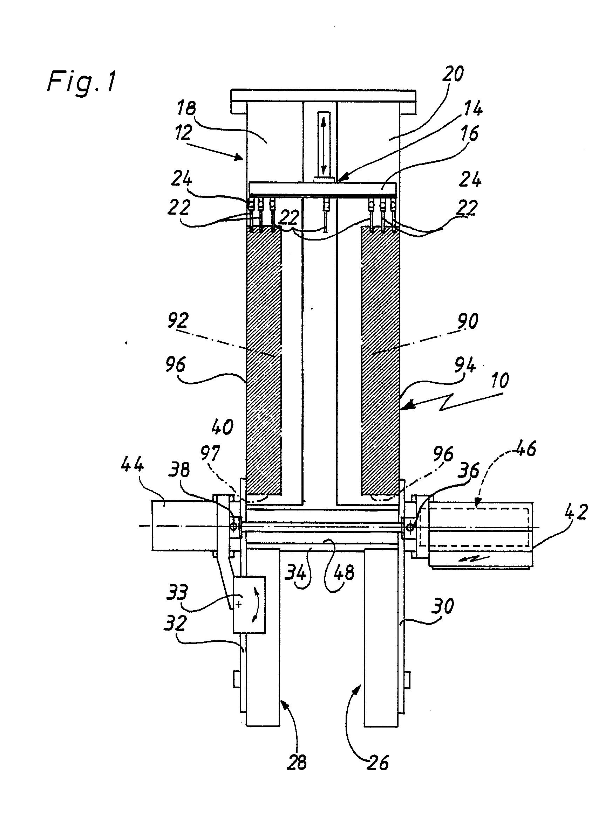

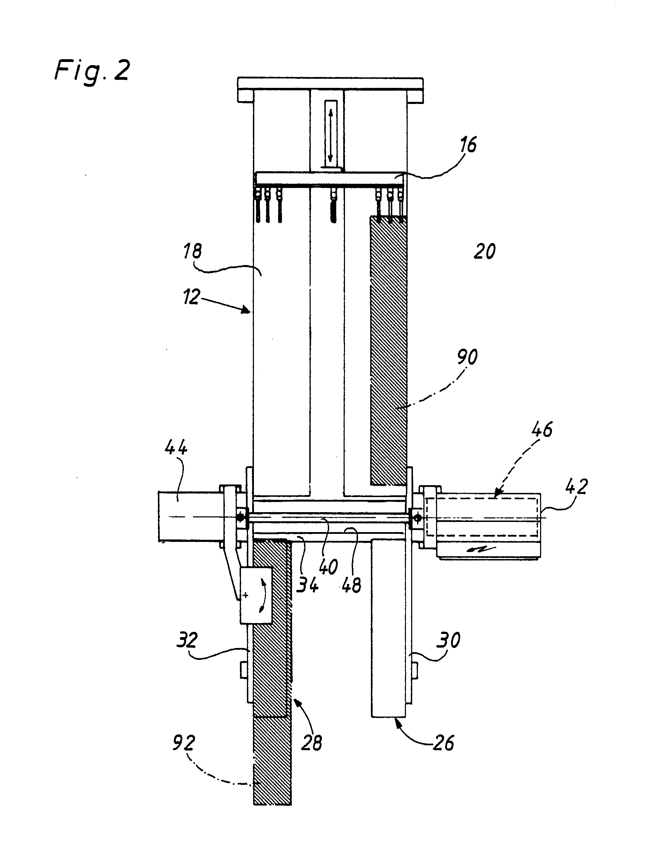

Die in den Fig. 1 und 2 gezeigte Bohrmaschine ist als Ganzes mit 10 bezeichnet. Sie weist einen Werkstückauflagetisch 12 auf, dem eine Werkstückvorschubvorrichtung 14 zugeordnet ist, die mit einem Werkstückschieber 16 ausgestattet ist, der oberhalb der durch zwei im Abstand parallel zueinander vorgesehene und sich in Vorschubrichtung erstreckende Tischplatten 18, 20 definierten Tischfläche geführt ist. Der Werkstückschieber 16 ist beispielsweise mittels einer antreibbaren Gewindespindel in den angegebenen Pfeilrichtungen hin und her steuerbar, wobei jedoch die Antriebsmittel nicht dargestellt sind. Er ist mit einer Vielzahl von Spannzangen 22 ausgestattet, wobei sich beispielsweise an seinen seitlichen Enden jeweils drei Spannzangen und in dessen mittlerem Teil eine Spannzange befinden, die beispielsweise jeweils über einen Pneumatikzylinder 24 zu öffnen und zu schliessen sind.

Am Vorderende des Werkstückauflagetisches 12 bzw. an dessen Bedienungsseite ist sowohl ein rechter Werkstückanlegetisch 26, als auch ein linker Werkstückanlegetisch 28 angeordnet, die jeweils mit einem Seitenanschlag 30 bzw. 32 ausgestattet sind.

An der Bedienungsseite sind die Tischplatten 18, 20 durch ein Querjoch 34 miteinander verbunden, an welches die vorzugsweise in Querrichtung verstellbaren und feststellbaren Werkstückanlegetische 26 und 28 vorzugsweise abnehmbar angebaut sind. Oberhalb des Querjoches 34 ist ein mittels vorzugsweise pneumatisch betätigten Zylinderaggregaten 36 und 38 anheb-und absenkbar geführter Druckbalken 40 vorgesehen, mit dessen Hilfe sich am Querjoch zu bohrende Werkstücke festspannen lassen.

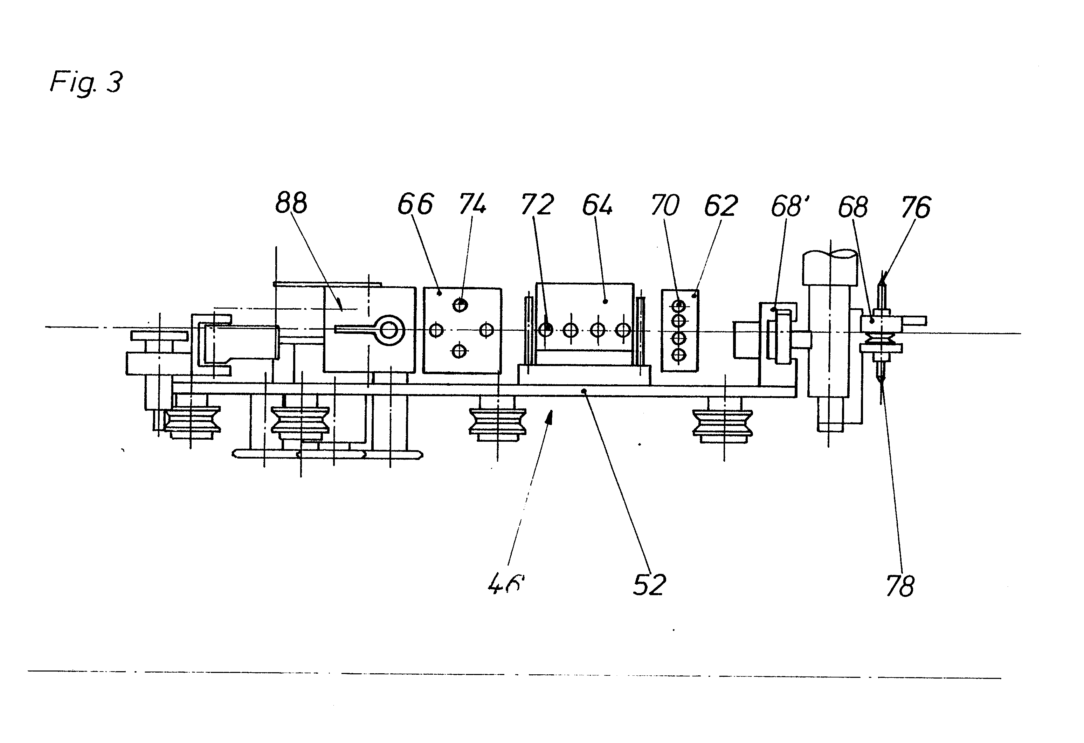

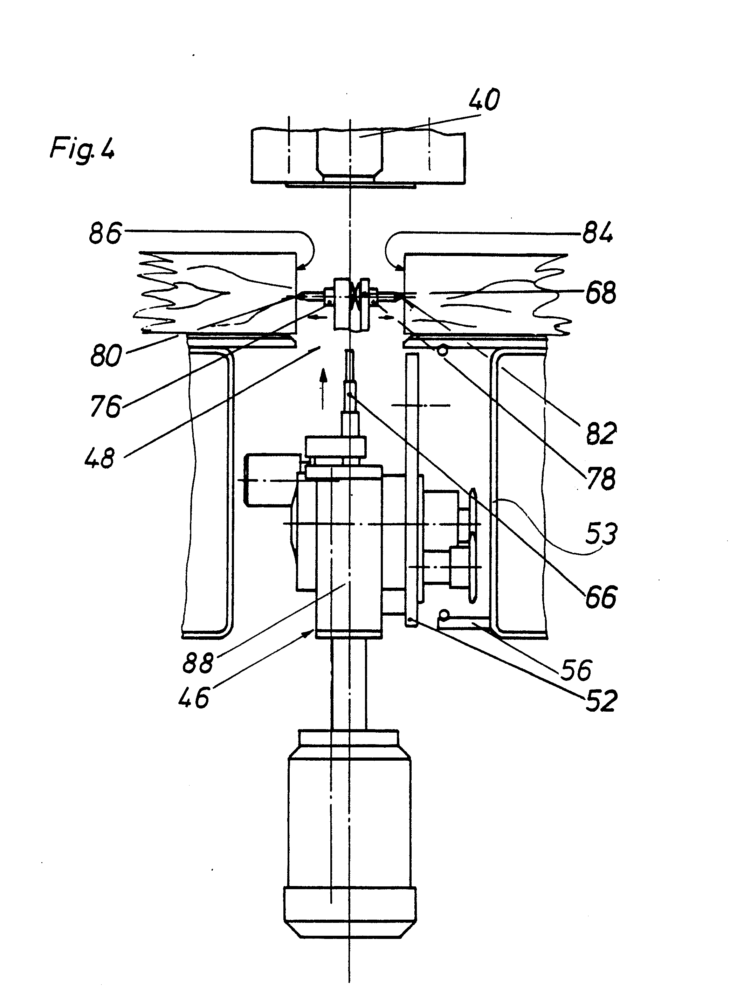

An das Querjoch sind stirnseitig Führungsvorrichtungen 42 und 44 angebaut, die mit Führungsmitteln zur Führung einer als Ganzes mit 46 bezeichneten Bohrvorrichtung, unter Tisch quer zur Vorschubrichtung der Werkstückvorschubvorrichtung 14 verfahrbar und, vorzugsweise programmgesteuert, in vorbestimmten Bohrstellungen feststellbar sind. Der Aufbau sowie die Führung der Bohrvorrichtung 46 ist im einzelnen aus den Fig. 3 und 4 ersichtlich.

Damit sowohl in die Unterseite von plattenförmigen Werkstücken oder Plattenzuschnitten, als auch in deren Stirnseiten Konstruktionsbohrungen eingebracht werden können, weist das Querjoch eine spaltförmige Ausnehmung 48 auf, die sich über die gesamte Breite des Werkstückauflagetisches 12 erstreckt.

Die Bohrvorrichtung 46 weist einen - schlittenartigen Träger 52 auf, der in einem Führungsgestell 53 senkrecht zur Vorschubrichtung des Werkstückschiebers 16 auf übereinander angeordneten Führungsschienen 54 und 56 verschiebbar geführt ist. Auf dem schlittenartigen Träger 52 sind beispielsweise vier Bohrköpfe 62, 64, 66 und 68 angeordnet, von denen die Bohrköpfe 62 und 64 jeweils eine Reihe mit beispielsweise vier Bohrspindeln 70 bzw. 72 aufweisen, die einander räumlich entsprechend einem gewünschten Bohrbild zugeordnet sind. Dies trifft auch für die Bohrspindeln 74 des Bohrkopfes 66 zu.

Die einzelnen Bohrköpfe 62 - 68 sind hintereinander angeordnet, wobei die gegenseitige Zuordnung der Bohrköpfe 62 und 64 derart getroffen ist, dass deren Reihen von Bohrspindeln 70,72 in horizontaler Ebene zueinander senkrecht verlaufen. Demgemäss erstreckt sich die eine Bohrspindelreihe senkrecht und die andere Bohrspindelreihe parallel zur Längsrichtung der spaltförmigen Ausnehmung 48. Die Bohrköpfe 62, 64 und 66 dienen zur Herstellung von Flächenbohrungen an der Unterseite plattenförmiger Werkstücke bzw. von Plattenzuschnitten, wozu diese Bohrköpfe in geeigneter Weise relativ zum Träger 52 in vertikaler Richtung nach oben zu steuern sind. Dies kann beispielweise pneumatisch erfolgen.

Der Bohrkopf 68 dient zur Herstellung von Bohrungen in Stirnkanten von Werkstücken bzw. Plattenzuschnitten. Hierzu ist dieser Bohrkopf 68 mit einem säulenförmigen Ansatz 68' ausgestattet, der im Bereich seines oberen Endes zwei vorzugsweise koaxial zueinander angeordnete Bohrspindeln 76 und 78 aufweist,die horizontal gelagert sind. Beide Bohrspindeln 76, 78 sind gemeinsam oder getrennt in gleicher oder gegenläufiger Drehrichtung antreibbar. Der Bohrkopf 68 ist am Träger 52 in vertikaler Richtung, beispielsweise pneumatisch verstellbar, angeordnet, so dass er bei Nichtgebrauch, analog zu den anderen Bohrköpfen, nach unten abtauchen kann. Aus Fig. 4 ist ersichtlich, dass in der Arbeitsposition des Bohrkopfes 68 dessen beide Bohrspindeln 76 und 78, bzw. in diese eingesetzte Bohrer 80, 82, sich in Richtung einander zugekehrter Stirnflächen 84 und 86 von Werkstücken erstrecken.

Der Träger 52 ist beim vorliegenden Ausführungsbeispiel noch mit einer Montagevorrichtung 88 ausgestattet, mit deren Hilfe sich beispielsweise Beschlagteile selbsttätig in zuvor eingebrachte Flächenbohrungen von Werkstücken einpressen lassen. Selbstverständlich können auch mehrere solcher Montagevorrichtungen vorgesehen sein. Der schlittenartige Träger 52 ist mittels einer nicht näher gezeigten Transportvorrichtung relativ zu den mit Bohrungen auszustattenden Werkstücken bzw. Plattenzuschnitten, insbesondere programmgesteuert, verstellbar und feststellbar. Die Bohrvorrichtung 46 kann, je nach dem, welcher bzw. welche Bohrköpfe benötigt werden, in eine oder mehrere vorbestimmte Bearbeitungsstellungen gesteuert werden, wonach die Bohrköpfe 62 - 68 und ggf. auch die Montagevorrichtung 88 in Funktion treten.

Mit Hilfe der beschriebenen Bohrmaschine sind Werkstücke folgendermassen zu bearbeiten:

Die Anordnung zweier Werkstückanlegetische 26 und 28 erlaubt es beispielsweise, wie Fig. 2 zeigt, gleichzeitig zwei zu einem Möbelkorpus gehörende und an einer Flachseite spiegelbildlich zu bohrende Plattenzuschnitte 90, 92 auf die Bohrvorrichtung aufzulegen und den einen Plattenzuschnitt 90 entlang seiner rechten Bezugs-bzw. Längskante 94 am Seitenanschlag 30 des Werkstückanlagetisches 26 auszurichten und den anderen Plattenzuschnitt 92 mit seiner linken Bezugs-bzw. Längskante 96 am Seitenanschlag 32 des Werkstückanlegetisches 28 auszurichten. Danach ist über eine Schaltvorrichtung 33 der Werkstückschieber 16 der Werkstückvorschubvorrichtung 14 aus seiner in Fig. 1 gezeigten hinteren Ausgangsstellung in seine vordere Endstellung anzufordern, wobei dessen Spannzangen 22 mittels der Pneumatikzylinder 24 in ihrer Offenstellung gesteuert werden. Ist der Werkstückschieber 16 in seiner vorderen Endstellung angelangt, können die beiden Plattenzuschnitte 90 und 92 durch die sich zwischen den beiden Werkstückanlegetischen 26 und 28 befindende Bedienungsperson mit ihrem gemäss Fig. 1 oberen Stirnende bis zum Anschlag in die Spannzangen 22 eingeschoben werden, wobei eine exakte Ausrichtung der Bezugs-bzw. Längskanten 94 und 96 der Plattenzuschnitte 90, 92 dadurch gewährleistet bleibt, dass diese entlang der Seitenanschläge 30, 32 verschoben werden. Danach kann mittels der Schaltvorrichtung 33 ein bestimmtes Bohrprogramm abgerufen werden, wonach die folgenden Arbeitsschritte automatisch durchgeführt werden:

Zunächst werden die Spannzangen 22 zum Spannen der Plattenzuschnitte 90, 92 geschlossen, wonach der Werkstückschieber 16 in seine hintere Ausgangsposition zurückgesteuert wird. Anschliessend werden die Plattenzuschnitte 90, 92 durch den Werkstückschieber 16 gemeinsam in ihre erste Bohrposition in Vorschubrichtung verschoben. Ist der entsprechende Vorschubschritt ausgeführt, wird der Druckbalken 40 durch die Zylinderaggregate 36, 38 in Spannstellung nach unten gesteuert und auf die Plattenzuschnitte aufgelegt, so dass diese im Bereich des Querjoches 34 auf dem Werkstückauflagetisch 12 festgespannt sind. Sodann wird die Bohrvorrichtung 46 gemäss Fig. 1 nach links in eine erste vorbestimmte Bohrposition gesteuert, wonach mit einem ihrer Bohraggregate 62 - 68, je nach dem, wie diese mit Bohrspindeln bestückt sind, in die untere Flachseite des Plattenzuschnitts 90 eine oder ggf. mehrere Bohrungen eingebracht werden. Ausserdem können danach mittels der Bohrspindel 76 bzw. des Bohrers 80 in die gemäss Fig. 1 untere Stirnkante 96 dieses Plattenzuschnittes 90 auch noch eine oder mehrere Stirnbohrungen eingebracht werden. Danach wird die Bohrvorrichtung 46 in Arbeitsposition zum Plattenzuschnitt 92 gesteuert, wobei dort spiegelbildlich die gleichen flachseitigen Bohrungen und ggf. eine oder mehrere Bohrungen in die Stirnkante 97 eingebracht werden. Anschliessend wird der Druckbalken 40 in seine Freigabestellung angehoben. Dann werden mittels des Werkstückschiebers 16 die Plattenzuschnitte 90, 92 in eine weitere Bohrposition in Vorschubrichtung verschoben, wobei dann nach erneutem Festspannen der Plattenzuschnitte durch den Druckbalken 40 die Bohrvorrichtung 46 zum Einbringen weiterer flachseitiger Bohrungen in beide Plattenzuschnitte 90, 92 in Aktion treten kann. Hierzu kann die Bohrvorrichtung zunächst wieder in die in Fig. 1 gezeigte Ausgangsstellung zurückgesteuert werden, so dass also bei jeder Bohroperation zunächst der Plattenzuschnitt 90 gebohrt wird; das Bearbeitungsprogramm kann jedoch auch so ausgelegt sein, dass die Bohrvorrichtung 46 nach jedem Vorschub zunächst wieder an den Plattenzuschnitt angesetzt wird, an dem die letzte Bohroperation ausgeführt worden ist. Es lassen sich somit stets ein paar spiegelbildlich zu bohrender Plattenzuschnitte 90, 92 gleichzeitig fertigstellen.

Wie Fig. 2 zeigt, kann jedoch auch so gearbeitet werden, dass während der Bohrbearbeitung, beispielsweise des Plattenzuschnittes 90, durch die Bedienungsperson ein Plattenzuschnitt 92 auf den Werkstückanlegetisch 28 aufgelegt wird, der dann in die Spannzangen 22 des Werkstückschiebers 16 eingeschoben werden kann, wenn dieser zur Freigabe des fertiggebohrten Plattenzuschnittes 90 geöffnet werden. Während dann die Bohrbearbeitung des Plattenzuschnittes 92 durchgeführt wird, kann auf dem Werkstückanlegetisch 26 wiederum ein weiterer Plattenzuschnitt aufgelegt und ausgerichtet werden.

**Ansprüche**

1. Bohrmaschine zum flachseitigen und/oder stirnseitigen Bohren von plattenförmigen Werkstücken oder Plattenzuschnitten, mit einem Werkstückauflagetisch, einer einen Werkstückschieber aufweisenden Werkstückvorschubvorrichtung und einer an deren Vorderende angeordneten, parallel zur Auflagefläche des Werkstückauflagetisches und quer zur Vorschubrichtung des mit Spannzangen ausgestatteten Werkstückschiebers verfahrbaren und feststellbaren Bohrvorrichtung, die mit je mindestens einer Bohrspindel ausgestattete Bohraggregate zum flachseitigen und/oder stirnseitigen Bohren aufweist, wobei die Bohrspindel zum stirnseitigen Bohren sowohl vertikal als auch in Bewegungsrichtung des Werkstückschiebers verstellbar ist, **dadurch gekennzeichnet,** dass der Bohrvorrichtung (46) an ihrer der Werkstückvorschubvorrichtung (14) gegenüberliegenden Bedienungsseite beidseitig jeweils ein mit einem Seitenanschlag (30) bzw. (32) ausgestatteter Werkstückanlegetisch (26) bzw. (28) sowie eine Spannvorrichtung (36, 38, 40) zum Festlegen von Werkstücken bzw. Plattenzuschnitten (90, 92) auf dem Werkstückauflagetisch (12) zugeordnet sind.

2. Bohrmaschine nach Anspruch 1,dadurch gekennzeichnet, dass die Bohrvorrichtung (46) unterhalb des Werkstückauflagetisches (12) angeordnet und letzterer oberhalb der Bohrvorrichtung durchbrochen ist.

3. Bohrmaschine nach Anspruch 1 oder 2, dadurch gekennzeichnet, dass die Bohrvorrichtung (46) zum stirnseitigen Bohren zwei koaxial oder zueinander parallel angeordnete, sich in entgegengesetzte Richtungen erstreckende, horizontale Bohrspindeln (76, 78) aufweist.

4. Bohrmaschine nach einem der vorhergehenden Ansprüche, dadurch gekennzeichnet, dass die Bohrvorrichtung (46) einen Trägerschlitten (52) aufweist, der entlang eines Führungsgestelles (53) horizontal verfahrbar und feststellbar ist.

Fig.1

*Fig. 2*

Fig. 3

88  66  74  72  64  70  62  68'  68  76

46'  52  78

0 283 993

Fig. 4